# EUROPÄISCHE PATENTANMELDUNG

(11) **EP 4 000 364 A1**
(43) Veröffentlichungstag der Anmeldung: **25.05.2022**
(21) Anmeldenummer: 21209770.3
(22) Anmeldetag: 23.11.2021
(51) Int. Cl.: A01C 7/08

(54) **VERTEILERKOPF FÜR EINE SÄ- UND/ODER DÜNGEMASCHINE**

(30) Priorität: 24.11.2020 DE 102020130985
(71) Anmelder: Pöttinger Landtechnik GmbH, 4710 Grieskirchen (AT)
(72) Erfinder: Loher, Felix, 4710 Grieskirchen (AT); Stadlbauer, Franz, 4710 Grieskirchen (AT)
(74) Vertreter: Thoma, Michael

(57) **Zusammenfassung**

Die Erfindung umfasst einen Verteilerkopf (8) für eine landwirtschaftliche Verteilmaschine, insbesondere Sä- und/oder Düngemaschine (1), zum pneumatischen Verteilen von Verteilgut wie Saatgut oder Dünger, mit einem aufrechten Steigrohr (7) zum Zuführen des Verteilguts in eine vorzugsweise pilzkopfförmige Verteilerkammer (13), von der über den Umfang der Verteilerkammer (13) verteilt eine Mehrzahl von Ausbringauslässen (14) abgeht, die vom Verteilerkopf (8) weg zu Ausbringelementen (10) der Verteilmaschine (1) führen, wobei zumindest einem der Ausbringauslässe (14) eine Weiche zugeordnet ist, die zwischen einer Ausbringstellung und einer Rückführstellung hin- und herschaltbar ist, wobei die Weiche (28) in der Ausbringstellung die Verteilerkammer (13) mit dem Ausbringauslass (14) verbindet sowie in der Rückführstellung die Verteilerkammer (13) mit einem Rückführraum (21) zum Rückführen des Verteilguts verbindet, wobei die Weiche (28) dazu ausgebildet ist, in der Rückführstellung die Verteilerkammer (13) über den Rückführraum (21) mit einem Luftauslass (23) zum Abführen überschüssiger Förderluft zu verbinden und in der Ausbringstellung den Rückführraum (21) von der Verteilerkammer (13) und dem Ausbringauslass (14) abzusperren.

## Beschreibung

Die vorliegende Erfindung betrifft einen Verteilerkopf für eine landwirtschaftliche Verteilmaschine, insbesondere Sä- und/oder Düngemaschine, zum pneumatischen Verteilen von Verteilgut wie Saatgut oder Dünger, mit einem aufrechten Steigrohr zum Zuführen des Verteilguts in eine vorzugsweise pilzkopfförmige Verteilerkammer, von der über den Umfang der Verteilerkammer verteilt eine Mehrzahl von Ausbringauslässen abgeht, die vom Verteilerkopf weg zu Ausbringelementen der Verteilmaschine führen, wobei zumindest einem der Ausbringauslässe eine Weiche zugeordnet ist, die zwischen einer Ausbringstellung und einer Rückführstellung hin- und herschaltbar ist, wobei die Weiche in der Ausbringstellung die Verteilerkammer mit dem Ausbringauslass verbindet sowie in der Rückführstellung die Verteilerkammer mit einen Rückführraum zum Rückführen des Verteilguts verbindet.

Bei pneumatisch arbeitenden Sämaschinen werden üblicherweise mit Hilfe eines Luftstroms Saatgut, Dünger oder ähnliche körnige Stoffe aus einem Saatgutbehälter durch ein Rohr zu einem Verteilerkopf geführt, in dem das Saatgut bzw. der Dünger oder dergleichen auf eine Mehrzahl von Ausbringauslässen verteilt wird, die über Rohre, Schläuche oder dergleichen mit entsprechenden Ausbringelementen verbunden sind, die in Reihe nebeneinander bzw. versetzt hintereinander angeordnet sind. Über diese Ausbringelemente wird das auszubringende Gut in mehreren Reihen nebeneinander auf dem bzw. in dem Boden abgelegt. Der Verteilerkopf sorgt hierbei dafür, dass das Saatgut zumindest näherungsweise gleichmäßig auf die im Verteilerkopf angeordneten Auslässe und die damit verbundenen Ausbringelemente verteilt wird. Üblicherweise umfasst der Verteilerkopf hierzu einen zumindest näherungsweise rotationssymmetrischen, grob gesprochen pilzkopfförmigen Verteilerraum, dem durch ein zentrales, aufrechtes Zuführrohr das Saatgut über einen Luftstrom eingeblasen wird, so dass sich das Saatgut in dem Verteilerraum auf die außenliegend angeordneten Ausbringauslässe verteilt.

Bei bestimmten Getreidesorten, beispielsweise bei Weizen, hat das Saatgut eine kleine Kornabmessung und kann in relativ engen Reihen und mit kleinen Abständen zwischen den Saatgutkörnern in der jeweiligen Reihe gesät werden. Bei anderen Sorten hingegen, beispielsweise bei Mais, mit einer größeren Kornabmessung wird normalerweise ein größerer Abstand zwischen den Reihen und auch zwischen den Körnern benötigt.

Um dieselbe Sämaschine für das Ausbringen verschiedener Getreidesorten zu verwenden und hierfür den Reihenabstand für das abgelegte Gut verändern zu können, wurde vorgeschlagen, in dem Verteilerkopf Blockierelemente einzusetzen, die beispielsweise jeden zweiten Auslass blockieren, so dass das Saatgut nur in jeden wiederum zweiten Auslass eintreten kann und über eine entsprechend verringerte Anzahl von Ausbringelementen ausgebracht wird, vgl. beispielsweise DE 10 2005 008 290 A1 oder DE 10 2005 038 216 A1.

Durch das Blockieren einzelner Auslässe ergeben sich jedoch Probleme hinsichtlich der Luftführung. Durch das Abdecken einzelner Auslässe kann in den nicht abgedeckten Auslässen eine zu hohe Strömungsgeschwindigkeit hervorgerufen werden, was zwar durch ein Verringern des Luftstroms insgesamt kompensiert werden könnte, was jedoch wiederum dazu führen kann, dass der Luftstrom im Zuführrohr nicht mehr ausreichend stark ist, um die Saatgutkörner mitzunehmen. Zum anderen kann es ggf. auch zu einem sogenannten "Kaffeemühleneffekt" kommen, wonach die Saatgutkörner durch Abprallen an den Blockierelementen beginnen, kreisbahnförmig in dem Verteilerkopf umhergewirbelt zu werden, anstatt in einen der noch offen gebliebenen Auslässe einzutreten.

Um beim Abschalten einzelner Auslässe die Strömungsverhältnisse in der Verteilerkammer möglichst unbeeinflusst zu lassen, wurde auch bereits vorgeschlagen, das Saatgut an den entsprechenden Auslässen an sich ungehindert austreten zu lassen, jedoch nicht zu den Ausbringelementen der Sä- bzw. Düngemaschine zu leiten, sondern in das Zufuhrsystem rückzuführen, beispielsweise indem die von den Auslässen des Verteilerkopfes abgehenden Schläuche umgesteckt werden, d.h. von den Ausbringelementen abgesteckt und beispielsweise am Saatguttank eingesteckt werden. Eine solche Lösung zeigt beispielsweise die Schrift DE 87 08 456.

Um das manuelle Umstecken der Saatgutleitungen zu vermeiden, wurde auch bereits vorgeschlagen, an den Auslässen des Verteilerkopfes umschaltbare Weichen vorzusehen, um das zu verteilende Saatgut wahlweise in den zu einem Ausbringelement führenden Auslass oder in eine Rückführleitung zu führen. Die Schrift DE 196 13 785 C1 zeigt eine solche umschaltbare Weiche, die zwei verschwenkbare Klappen besitzt, um wahlweise den regulären Auslass oder den abzweigenden Rückführkanal zu sperren. Der Rückführkanal ist über einen Schlauch mit einem Sammler verbunden, der das rückgeführte Saatgut in eine ein Zellenrad aufweisende Dosiereinrichtung leitet.

Die Schrift EP 0 752 203 B1 zeigt einen ähnlichen Verteilerkopf, bei dem eine ähnliche Weiche auf den Auslässen des Verteilerkopfes sitzt, um das über die Auslässe ausströmende Saatgut wahlweise über Schläuche zu den Ausbringelementen oder in einen Rückführschlauch zu leiten, welcher in das Steigrohr des Verteilerkopfes führt. Über die genannten Rückführschläuche wird das Saatgut bei einem jeweils abgesperrten Ausbringelement direkt in das Steigrohr rückgeführt, wobei die Dosiereinrichtung die zudosierte Saatgutmenge entsprechend reduziert, um die rückgeführte Erntegutmenge zu berücksichtigen und trotz der Rückführung eine gleichmäßige Ausbringmenge in den nicht abgesperrten Ausbringelementen zu erreichen.

Aus der Schrift EP 36 53 036 A1 ist ein ähnlicher Verteilerkopf bekannt, an dessen Ausbringauslässen Weichen in Form von Ventilklappen vorgesehen sind, um wahlweise die Ausbringauslässe zu blockieren und das Verteilgut in Rückführschläuche umzuleiten, oder die genannten Rückführschläuche bzw. darin einmündende Bypassöffnungen zu blockieren und die Ausbringauslässe freizugeben. Dabei haben die Rückführschläuche einen Verbindungskanal in die Ausbringschläuche, der unabhängig von der Schaltstellung der Weiche permanent offen ist, um einen Druckausgleich zwischen dem Rückführschlauch und dem Ausbringschlauch zu ermöglichen. Hierdurch soll verhindert werden, dass sich im Rückführsystem ein überdruck aufbaut, insbesondere wenn eine Vielzahl von Ausbringauslässen gesperrt sind und eine entsprechend große Luftmenge über die Rückführschläuche in das Steigrohr zurückgeführt werden müsste. Allerdings wird dieser Druckausgleich mit Effizienzverlusten in der Ausbringstellung erkauft, die einen entsprechend erhöhten Luftförderstrom erfordert, um die Körner über die Ausbringschläuche verlässlich und gleichmäßig zu den Ausbringelementen zu befördern.

Um den Wust an Rückführschläuchen zu vermeiden, die von den abschaltbaren Ausbringauslässen jeweils separat zum Steigrohr führen, schlägt ferner die Schrift EP 26 95 508 B1 ein zentrales Rückführsystem vor, bei dem ein Trichter das Steigrohr umgibt und zum äußeren Rand des Verteilerkopfes reicht, um die im Boden des Verteilerkopfes vorgesehenen Rückführ- bzw. Bypassöffnungen zu umgreifen. In der Rückführstellung der Weichen wird das Verteilgut zusammen mit dem Luftstrom über die dann geöffneten Rückführ- bzw. Bypassöffnungen in den großvolumigen Trichter geleitet, in dem die Druckluft deutlich an Förderwirkung und - geschwindigkeit verliert. Trotzdem kann es durch die kreislaufartige Rückführung der Förderluft im Bereich des Steigrohrs und in der daran anschließenden Verteilerkammer zu einem erhöhten Förderluftstrom und damit einhergehend erhöhten Luftstromgeschwindigkeiten oder umgekehrt im Bereich des Trichters zu Staueffekten kommen, die die Rückführung des Verteilguts bzw. dessen Rückspeisung in das Verteilsystem beeinträchtigen können.

Der vorliegenden Erfindung liegt die Aufgabe zugrunde, einen verbesserten Verteilerkopf der eingangs genannten Art zu schaffen, welcher Nachteile des Standes der Technik vermeidet und Letzteren in vorteilhafter Weise weiterbildet. Insbesondere soll eine in Rückführstellung und Ausbringstellung der Weiche gleichermaßen effiziente Förderluftverteilung und -nutzung erreicht werden, ohne eine gleichmäßige Körnerverteilung durch Schwankungen in der Förderluftmenge und - geschwindigkeit zu beeinträchtigen.

Erfindungsgemäß wird diese Aufgabe durch einen Verteilerkopf gemäß Anspruch 1 gelöst. Bevorzugte Ausführungen der Erfindung sind Gegenstand der abhängigen Ansprüche.

Es wird also vorgeschlagen, überschüssige Förderluft aus dem Rückführsystem entweichen zu lassen, wenn der Verteilerkopf bzw. der jeweilige Ausbringauslass auf Rückführung geschaltet ist, andererseits aber den Ausbringauslass und dessen Verbindung zur Verteilerkammer vollständig vom Rückführsystem abzusperren, wenn der Verteilerkopf bzw. der jeweilige Ausbringauslass auf Ausbringen geschaltet ist bzw. freigegeben ist, um keine Effizienzeinbußen und Druckverluste beim Ausbringen des Verteilguts zu den Ausbringelementen zu erleiden. Hierzu wird für das Rückführsystem ein Luftauslass vorgesehen, der bei auf Rückführung geschalteter Weiche geöffnet ist und überschüssige Förderluft aus dem Rückführsystem entweichen lässt, andererseits aber bei auf Ausbringen geschalteter Weiche geschlossen ist bzw. vom Ausbringauslass abgeschottet ist.

Erfindungsgemäß ist die genannte Weiche dazu ausgebildet, in der Rückführstellung die Verteilerkammer über den Rückführraum mit einem Luftauslass zu verbinden und in der Ausbringstellung den Rückführraum und den genannten Luftauslass gegenüber der Verteilerkammer und dem Ausbringauslass zu verschließen. Hierdurch kann einerseits in der Rückführstellung vermieden werden, dass sich im Rückführraum ein zu hoher Förderluftstrom bzw. Luftdruck einstellt, der im weiteren Verlauf auch den Förderstrom im Steigrohr und/oder der Verteilerkammer und damit das Ausbringen des Verteilguts über die verbleibenden, noch offenen Ausbringauslässe beeinträchtigen würde, während andererseits in der Ausbringstellung Effizienzverluste und Druckabfall in den Ausbringleitungen vermieden werden können.

Der genannte Luftauslass, über den aus dem Rückführraum bei in Rückführstellung befindlicher Weiche überschüssige Luft entweichen kann, schafft vorzugsweise eine Verbindung von dem Rückführraum zum an sich abgesperrten Ausbringauslass bzw. der davon abgehenden Ausbringleitung, sodass die überschüssige Förderluft über die Ausbringleitung entweichen kann. Während die direkte Verbindung der Verteilerkammer zum Ausbringauslass gesperrt ist, so dass kein Verteilgut ausgetragen wird, ist der Rückführraum mit dem Ausbringauslass über den Luftauslass verbunden, so dass überschüssige Luft aus dem Rückführraum über den Ausbringauslass entweichen kann, wenn das System auf Rückführung geschaltet ist.

Insbesondere kann der genannte Luftauslass hinter der geöffneten Weiche in den Ausbringauslass münden, sodass die überschüssige Förderluft an der absperrenden Weiche vorbei in den Ausbringauslass strömen kann.

Alternativ oder zusätzlich wäre es auch denkbar, die überschüssige Förderluft in der Rückführstellung des Systems zur Umgebung hin entweichen zu lassen, das heißt am Ausbringauslass und der Ausbringleitung vorbei direkt an die Umgebung entweichen zu lassen. Hierzu könnte der Rückführraum vorzugsweise an einem oberen Randabschnitt und/oder in einem Bereich, der von der in Rückführstellung befindlichen Weiche bis auf einen Entweichspalt abgedeckt sein kann, einen bzw. den genannten Luftauslass vorzusehen.

Vorteilhafterweise kann die genannte Weiche dazu ausgebildet sein, in ihrer Rückführstellung zwei zueinander gegenläufige Kanäle zu definieren, von denen einer auf der stromaufwärtigen Seite der Weiche von der Verteilerkammer in den Rückführraum führt und der andere gegenläufig dazu auf der stromabwärtigen Seite der Weiche vom Rückführraum in den Ausbringauslass führt. Die Gegenläufigkeit der beiden Kanäle hilft dabei, dass nur überschüssige Förderluft, nicht aber das davon beförderte Verteilgut über den gegenläufigen Kanal in den Auslass gelangt. Das trägere, schwerere Verteilgut kann sozusagen nicht scharf genug abbiegen und um die Weiche herum in den gegenläufigen Auslasskanal abbiegen und nimmt daher den an sich vorgesehenen, regulären Weg entlang des Rückführsystems, während die überschüssige Luft durch den gegenläufigen Auslasskanal entweichen kann.

Vorzugsweise kann der Kanal, der von der Verteilerkammer in den Rückführraum führt, abschüssig sein, während der gegenläufige Kanal aus dem Rückführraum in den Ausbringauslass ansteigend verläuft. Hierdurch fällt es dem Verteilgut nochmals schwerer, ungewollt in den Luftauslass abzubiegen. Insbesondere können die beiden gegenläufigen Kanäle aufrecht oder näherungswesie vertikal verlaufen.

Um das rückgeführte Verteilgut verlässlich vom gegenläufigen Auslasskanal abzuhalten, kann die Weiche zwischen den beiden genannten, gegenläufigen Kanälen eine insgesamt keilförmige Konturierung besitzen und/oder auf ihrer stromaufwärtigen Seite eine schanzen- oder höckerartige und/oder sich von dem gegenläufigen Kanal auf der stromabwärtigen Seite wegspreizende Strömungsleitkontur aufweisen, die das auf der stromaufwärtigen Seite der Weiche in den Rückführraum einströmende Verteilgut von dem gegenläufigen Auslasskanal auf der stromabwärtigen Weichenseite wegleitet.

Insbesondere kann die Weiche in einem Randabschnitt, der die stromaufwärtige Seite der Weiche mit deren stromabwärtigen Seite verbindet bzw. den Übergang zwischen diesen beiden Seiten definiert, eine Verdickung aufweisen und/oder auf der stromaufwärtigen Seite dieses Randabschnitts eine Ausbeulung aufweisen, die das dort entlang strömende Verteilgut in den Rückführraum und gleichzeitig weg von dem gegenläufigen Auslasskanal leitet.

In vorteilhafter Weiterbildung der Erfindung kann die genannte Weiche als schwenkbare Klappe ausgebildet sein, die zwischen der Rückführstellung und der Ausbringstellung hin und her schwenkbar bzw. klappbar ist. Vorteilhafterweise kann die Schwenkachse der Klappe von den stromaufseitigen und stromabseitigen Randabschnitten der Klappe beabstandet bzw. zwischen den stromaufseitigen und -abseitigen Randabschnitten der Klappe angeordnet sein, sodass die Klappe nach Art einer Wippe gegenläufig verschwenkende Abschnitte besitzt. Ist beispielsweise die Klappe in ihrer Ausbringstellung näherungsweise liegend angeordnet, kann beim Verschwenken in die Rückführstellung ein Klappenabschnitt nach oben und ein auf der anderen Seite der Schwenkachse liegender Klappenabschnitt nach unten schwenken.

Die genaue Lage der Schwenkachse kann dabei variieren, beispielsweise in einem Bereich von ¼ bis ¾ der Länge der Klappe angeordnet sein, wenn die genannte Länge sich vom stromaufseitigen Ende bis zum stromabseitigen Ende der Klappe erstreckt.

Grundsätzlich wäre dabei eine mittige Anordnung der Schwenkachse denkbar. Insbesondere kann die genannte Schwenkachse aber auch außermittig positioniert sein, wobei vorzugsweise ein Versatz zum stromabseitigen Ende der Klappe hin vorgesehen sein kann.

Beispielsweise kann die Schwenkachse im Bereich von 1/5 bis 1/3 oder bei etwa ¼ der Länge der Klappe angeordnet sein, wenn die genannte Länge vom stromabseitigen Ende der Klappe aus gemessen wird.

Die Schwenkachse erstreckt sich dabei vorteilhafterweise quer zur Strömungsrichtung des Förderluftstroms aus der Verteilerkammer in den Ausbringauslass. Unabhängig hiervon kann sich die genannte Schwenkachse im Wesentlichen in der Ebene der Kanalöffnung erstrecken, die die Verteilerklappe in der Ausbringstellung verschließt.

Ist die Rückführ- bzw. Bypassöffnung im Boden der Verteilerkammer und/oder bodenseitig am Eingang des Ausbringauslasses vorgesehen, kann sich die genannte Schwenkachse liegend an der genannten Bodenseite erstrecken, wobei die Weiche bzw. Klappe sich in der Ausbringstellung liegend am Boden erstrecken kann, um die genannte Rückführ- bzw. Bypassöffnung zu verschließen.

In der Rückführstellung kann die Klappe nach Art einer schiefen Bahn bzw. spitzwinklig geneigt zur Vertikalen abfallend angestellt sein, um den aus der Verteilerkammer kommenden Förderluft-/Verteilgutstrom schräg nach unten in den Rückführraum zu leiten.

Um verlässlich zu verhindern, dass rückzuführendes Verteilgut über den Umweg des Rückführraums durch den Luftauslass in die Ausbringauslässe gelangt, kann der Rückführraum auch mit einem Rückhaltegitter bzw. -sieb versehen sein, das im Luftauslass angeordnet sein kann. Das genannte Rückhaltesieb läßt Förderluft hindurchströmen, hält andererseits aber das Verteilgut wie Saatgut oder Dünger zurück.

Vorteilhafterweise kann das Rückhaltesieb an den Verstellweg der Weiche angepasst sein derart, dass die Weiche in der Rückführstellung an das Rückhaltesieb angrenzt und/oder das Rückhaltesieb kontaktiert, sodass das Rückhaltesieb den Luftauslass und/oder den Auslasskanal entlang der stromabwärtigen Seite der Weiche vollständig verschließt. In der Ausbringstellung kann die Weiche vom Rückhaltesieb beabstandet sein.

Insbesondere kann das Rückhaltesieb einen Steg bilden, der entlang eines äußeren Randes des Rückführraums und/oder entlang einer Wandung des Luftauslasses angeordnet sein kann derart, dass das Rückhaltesieb an die Weiche in deren Rückführstellung angrenzt.

Die Rückführung des Ernteguts von den jeweils gesperrten Auslässen kann grundsätzlich auf verschiedene Weise erfolgen, bspw. über einzelne, den jeweiligen Auslässen zugeordnete Rückführschläuche, die in das Steigrohr, einen anderen Zuführleitungsabschnitt oder auch den Tank führen können, oder auch über eine allen sperrbaren Auslässen des Verteilerkopfes gemeinsame Sammelrückführung, die entsprechend großvolumig ausgebildet sein kann und die Rückführgeschwindigkeiten deutlich reduziert, wobei eine solche Sammelrückführung beispielsweise einen das Steigrohr umgebenden Trichter umfassen kann, der mit seinem oberen Rand an die Verteilerkammer anschließt und mit seinem unteren Ende in das Steigrohr übergehen kann, so dass ein oberer Teil des Steigrohrs im Inneren der Trichterkammer liegt.

Der an die Weiche angrenzende Rückführraum, dessen Verbindung zur Verteilerkammer, zum Ausbringauslass und zum genannten Luftauslass von der Weiche gesteuert wird, kann also verschieden ausgebildet sein. Insbesondere kann der genannte Rückführraum ein stromaufseitiger Abschnitt einer separaten Rückführleitung sein oder ein oberer Abschnitt des genannten Trichterraums sein, je nachdem, welches Rückführsystem vorgesehen wird.

Durch das Einleiten des rückgeführten Verteilguts in eine solche großvolumige Trichterkammer, die an den Boden der Verteilerkammer anschließt, verliert die das Verteilgut fördernde Druckluft deutlich ihre Förderwirkung bzw. -geschwindigkeit, so dass das rückgeführte Verteilgut deutlich an Geschwindigkeit verliert und im Wesentlichen nur von der Schwerkraft getrieben an der Trichterwandung herunterrutscht bzw. -rollt. Hierdurch ist die Eintrittsgeschwindigkeit in das Steigrohr und insbesondere die nach unten gerichtete Bewegungskomponente des rückgeführten Verteilguts deutlich geringer, wodurch es dem nach oben gehenden Luftstrom im Steigrohr deutlich einfacher gelingt, die rückgeführten Körner mitzureißen. Überraschenderweise beeinträchtigt die deutliche Querschnittsaufweitung, die für den rückgeführten Luftstrom am Übergang in den Trichterraum hinein eintritt, die Strömungsverhältnisse im Inneren der Verteilerkammer kaum.

In Weiterbildung der Erfindung kann der obere Rand des Trichters derart bemessen sein, dass der genannte obere Rand an die Verteilerkammer in einem Bereich eines äußeren Randabschnitts der Verteilerkammer anschließt. Vorteilerhafterweise kann die genannte Verteilerkammer radial innerhalb des oberen Trichterrands in ihrer Bodenwandung Bypassöffnungen besitzen, die in den von dem Trichter umschlossenen Trichterraum münden. Insbesondere kann der Rückführtrichter derart ausgebildet sein, dass der obere Rand im Wesentlichen von unten her an den Außenumfang bzw. einen daran angrenzenden Abschnitt des Bodens der Verteilerkammer anschließt, so dass der Trichter im Wesentlichen die gesamte Bodenseite der Verteilerkammer umgreift bzw. daran anschließt.

Grundsätzlich könnte der Trichter nach Art eines Auffangtrichters ein Stück weit vom Boden der Verteilerkammer beabstandet angeordnet sein und von Letzterer durch einen Spalt getrennt sein. Herabfallendes, rückgeführtes Verteilgut würde wie ein Regentropfen aufgefangen und im Trichter weiter nach unten auf das Steigrohr zugeleitet werden. In vorteilhafter Weiterbildung der Erfindung jedoch schließt der Trichter mit seinem oberen Trichterrand spaltfrei an die Wandung der Verteilerkammer an, insbesondere an den Boden der Verteilerkammer, wobei zwischen dem Trichter und der Wandung der Verteilerkammer eine feste, staub- und/oder luftdichte Verbindung vorgesehen sein kann, beispielsweise in Form einer Steckverbindung oder auch einer stoffschlüssigen Verbindung beispielsweise im Sinne einer integral einstückigen Ausbildung von Trichter und Verteilerkammerboden.

In Weiterbildung der Erfindung kann bei einer bodenseitig vorgesehenen Bypassöffnung und umfangsseitig abgehenden Auslässen der Verteilerkammer eine Ventilklappe um eine bodenseitig angeordnete, liegende Achse schwenkbar gelagert sein derart, dass die Ventilklappe einerseits auf die bodenseitige Bypassöffnung schwenkbar ist oder andererseits aufrichtbar auf die Auslassöffnung schwenkbar ist.

Um rückzuleitendes Verteilgut auslassnah ableiten zu können, kann der Rückführtrichter vorteilhafterweise einen maximalen Durchmesser und/oder einen Durchmesser am oberen Rand besitzen, der im Wesentlichen dem maximalen Durchmesser der Verteilerkammer entspricht, insbesondere etwa dem Durchmesser, an welchem umfangsseitig die zu den Ausbringelementen führenden Auslässe der Verteilerkammer angeordnet sind. In Weiterbildung der Erfindung kann der maximale Durchmesser des Trichters etwa 80% bis 100% des maximalen Durchmessers der Verteilerkammer entsprechen.

Die Erfindung wird nachfolgend anhand bevorzugter Ausführungsbeispiele und zugehöriger Zeichnungen näher erläutert. In den Zeichnungen zeigen:
- Fig. 1:: eine schematische, perspektivische Darstellung einer landwirtschaftlichen, pneumatischen Verteilmaschine in Form einer Sämaschine nach einer vorteilhaften Ausführung der Erfindung,
- Fig. 2:: eine schematische Darstellung des Wegs des Saatgutaustrags und der hierbei wirksamen Maschinenkomponenten der Sämaschine aus Fig. 1,
- Fig. 3:: eine Teilschnittansicht durch den Verteilerkopf der Sämaschine aus den vorhergehenden Figuren, die die Weiche zum Umschalten eines Ausbringauslasses zwischen Ausbringen und Rückführen des Saatguts in der Ausbringstellung zeigt,
- Fig. 4:: eine Teilschnittansicht des Verteilerkopfes nach Fig. 3, die die Weiche in der Rückführstellung zeigt,

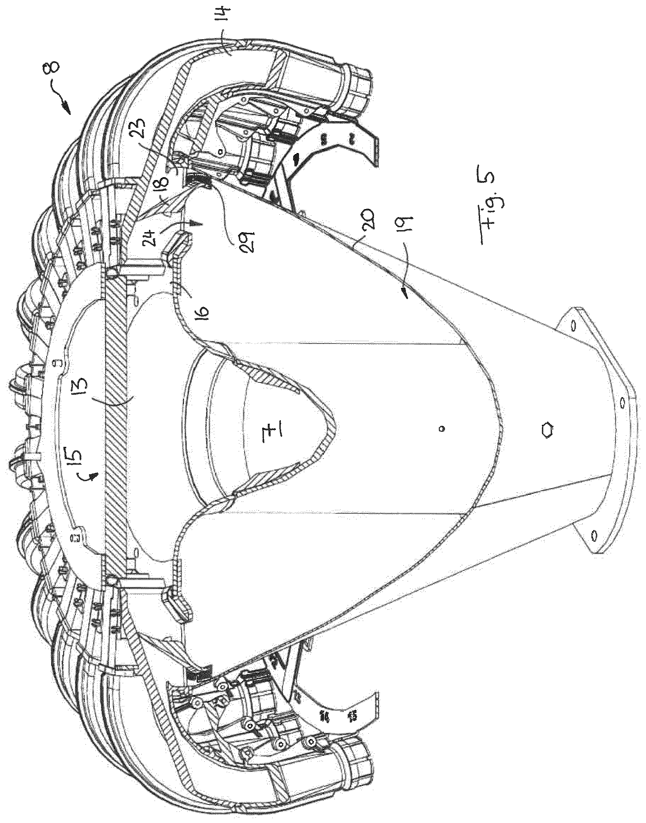

- Fig. 5:: eine perspektivische Teilschnittansicht eines Verteilerkopfs ähnlich den Figuren 3 und 4, wobei im Rückführraum ein Rückhaltegitter vorgesehen ist, gegen das die Weiche in ihrer Rückhaltestellung fährt, sodass über den Luftauslass nur Luft, nicht aber Verteilgut entweichen kann, und
- Fig. 6:: eine Schnittansicht eines Verteilkopfs ähnlich den Figuren 3 und 4, wobei am oberen Rand des Rückführtrichters ein Luftauslass in Form von feinen Bohrungen vorgesehen ist, über die überschüssige Förderluft aus dem Rückführtrichter an den Ausbringauslässen vorbei direkt in die Umgebung entweichen kann.

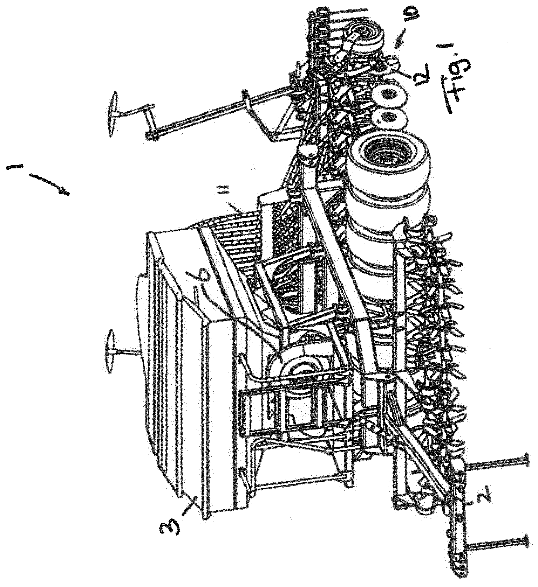

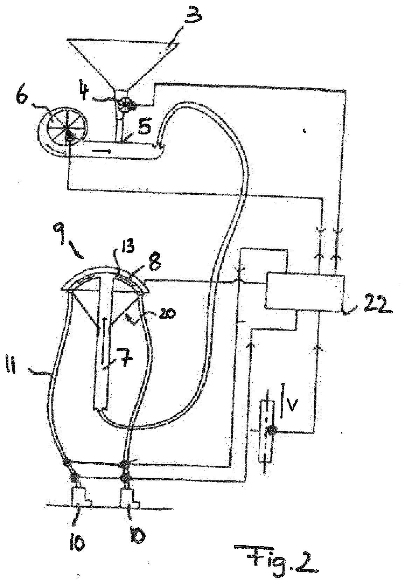

Wie Fig. 1 und 2 zeigen, kann die beispielsweise über ein Anbauelement 2 an einen Schlepper anbaubare Sä- und/oder Düngemaschine 1 einen Verteilgutspeicher 3 umfassen, aus dem durch eine zentrale Dosiervorrichtung 4, beispielsweise umfassend einen Dosierrotor, eine gewünschte Verteilgutmenge in Form von Samenkörnern, Düngemittelkörnern oder dergleichen in einen Förderkanal 5 gegeben werden kann. Mittels eines mit dem Förderkanal 5 verbindbaren Gebläses 6 oder einer anderen Druckluftvorrichtung kann das von der Dosiervorrichtung 4 bereitgestellte Verteilgut über den Förderkanal 5 und ein damit verbundenes aufrechtes, zentrales Steigrohr 7 pneumatisch in die Verteilerkammer 13 eines Verteilerkopfes 8 eines Saatgutverteilers 9 gefördert werden. Der genannte Verteilerkopf 8 verteilt das ankommende Verteilgut auf eine Mehrzahl von Ausbringelementen 10, mit denen der Verteilerkopf 8 jeweils über Ausbringleitungen bzw. -schläuche 11 verbunden ist. Die genannten Ausbringleitungen 11 sind mit Ausbringauslässen 14 des Verteilerkopfes 8 und über diese Auslässe 14 mit der Verteilerkammer 13 verbunden. Die Ausbringelemente 10 der Sä- und/oder Düngemaschine 1 können beispielsweise Säschare 12 umfassen, vgl. Fig. 1.

Wie Fig. 2 zeigt, kann eine Steuereinrichtung 22 über diverse Erfassungseinrichtungen Betriebsparameter an den verschiedenen Maschinenkomponenten, beispielsweise Taktung der Dosiervorrichtung oder Drehzahl des Gebläses 6, und/oder das Ergebnis betreffende Ausbringparameter wie beispielsweise abgegebene Körnerzahl überwachen, um in Abhängigkeit dieser Betriebs- und Ausbringparameter die Maschinenkomponenten zu steuern.

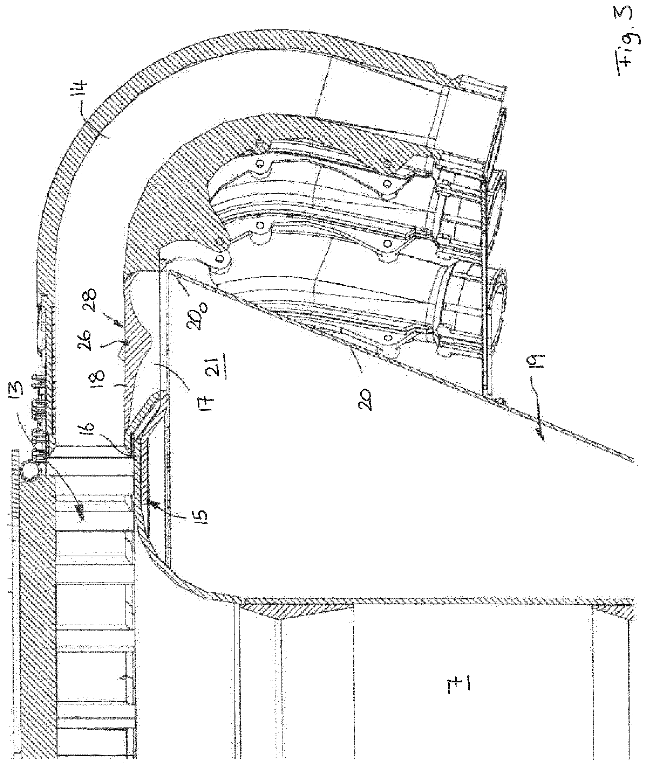

Der Verteilerkopf 8 umfasst einen insgesamt - grob gesprochen - pilzförmigen Verteilerkorpus 15, der gehäuseartig ausgebildet ist und in seinem Inneren die Verteilerkammer 13 begrenzt, die insbesondere rund, leicht tellerförmig gewölbt ausgebildet sein kann, vgl. Fig. 3. Das Steigrohr 7 bildet ein senkrecht angeordnetes Zuführrohr, das zentral, mittig von unten her in die genannte Verteilerkammer 13 mündet, so dass durch einen entsprechenden Luftstrom über das genannte Steigrohr 7 das Verteilgut wie Saatgut, Dünger oder ähnliche körnige Stoffe in die Verteilerkammer 13 eingeblasen werden können. In der genannten Verteilerkammer 13 prallen die Verteilgutkörner zunächst gegen die der Mündung des Steigrohrs 7 gegenüber angeordnete Deckenwandung, von wo aus sie sich radial nach außen verteilen.

Am radial außen liegenden Rand, insbesondere der dort vorgesehenen Umfangswandung, besitzt der Verteilkorpus 15 über den Umfang verteilt eine Vielzahl von Auslassöffnungen bzw. Ausbringauslässen 14, die - grob gesprochen - radial, ggf. leicht nach unten geneigt vom Verteilerkorpus 15 abgehen.

Im Boden 16 des Verteilerkorpus 15 sind jeweils vor den genannten Auslässen 14 Bypassöffnungen 17 ausgebildet, die entlang eines Kranzes am äußeren Rand des Verteilerkorpusbodens 16 angeordnet sind. Den genannten Bypassöffnungen 17 und den zugehörigen Auslässen 14 sind jeweils schwenkbar gelagerte Klappen 18 zugeordnet, die zwischen einer die Auslässe 14 versperrenden Stellung und einer die Bypassöffnungen 17 verschließenden Stellung hin und her schwenkbar sind, so dass jeweils nur eine Öffnung eines Auslass- und Bypassöffnungspaares geöffnet ist.

Grundsätzlich kann jedem Auslass 14 eine Bypassöffnung 17 zugeordnet sein, wobei je nach Anforderungen an die Abschaltung ggf. auch nur einem Teil, beispielsweise jedem zweiten Auslass 14 eine Bypassöffnung 17 zugeordnet sein kann. Vorteilhafterweise ist hierbei jeder Bypassöffnung 17 ein eigenes Verschlusselement bzw. eine eigene Klappe 18 zugeordnet, die vorteilhafterweise individuell betätigbar ausgebildet ist, so dass jede Bypassöffnung 17 mit zugehörigem Auslass 14 unabhängig von anderen Bypassöffnungen bzw. Auslässen verschließbar und freigebbar ist. Gegebenenfalls kann aber auch hier eine gruppenweise Zusammenfassung oder auch eine Zusammenfassung aller Verschlusselemente vorgesehen sein, wobei jedoch eine individuelle Betätigbarkeit bevorzugt ist, um Einzel- oder Gruppenabschaltungen individuell vornehmen zu können. Hierdurch können beispielsweise ein Fahrgassenschaltung vorgenommen werden, bei der die in einer Fahrgasse angeordneten Ausbringelemente abgesperrt werden, oder eine Halbseitenabschaltung, bei der eine Hälfte der Ausbringelemente beispielsweise auf einer rechten Seite der Sämaschine komplett abgeschaltet werden. Andere Abschaltungsvarianten sind möglich und von der Steuereinrichtung 22 realisierbar, welche die Klappen 18 bzw. Verschlusselemente und deren zugehörige Aktoren ansteuern kann.

Zur Rückführung der durch eine oder mehrere Bypassöffnungen 17 bodenseitig aus der Verteilerkammer 13 austretenden Körner in den Zuführkreislauf kann die hierfür vorgesehene Rückführeinrichtung 19 einen Trichter 20 umfassen, der das Steigrohr 7 umschließt, so dass sich das Steigrohr 7 mit seinem oberen Teil im Inneren des vom Trichter 20 umschlossenen Trichterraums erstreckt. Mit seinem oberen Rand 20o schließt der genannte Trichter 20 an den Boden des Verteilerkorpus 15 an, während das untere Ende 20u des Trichters 20 in das Steigrohr 7 mündet bzw. in dieses übergeht. Der obere Rand 20o des Trichters 20 entspricht in seinem Durchmesser im Wesentlichen dem maximalen Durchmesser der Verteilerkammer 13 bzw. dem Durchmesser, an welchem die Auslässe 14 von der Verteilerkammer 13 abgehen. Der genannte obere Rand 20o kann hierbei fest mit dem Boden 16 des Verteilerkorpus 15 verbunden sein, beispielsweise durch eine Steckverbindung.

Der Trichter 20 kann vorteilhafterweise kegelförmig, insbesondere kreiskegelförmig ausgebildet sein und sich je nach Gegebenheiten mit unterschiedlichen Kegelwinkeln nach oben hin zum Verteilerkorpus 15 aufweiten, wobei nach einer vorteilhaften Weiterbildung der Erfindung der Trichter 20 eine Aufweitung unter einem Kegelwinkel von 2x15° bis 2x50°, insbesondere etwa 2x25° bis 2x35° besitzen kann.

An seinem unteren Ende kann der Trichter 20 fest mit dem Steigrohr 7 verbunden sein, insbesondere mit dessen unterem Teil bzw. kann der Trichter 20 in den unteren Teil des Steigrohrs 7 übergehen bzw. auslaufen. Der obere Teil des Steigrohrs 7 ist an der Einmündungsstelle des Trichters 20 durch einen ringförmigen Spalt vom unteren Teil des Steigrohrs 7 getrennt, so dass umfangsseitig vom Trichter 20 her rückgeführtes Verteilgut in das Steigrohr 7 gelangen kann.

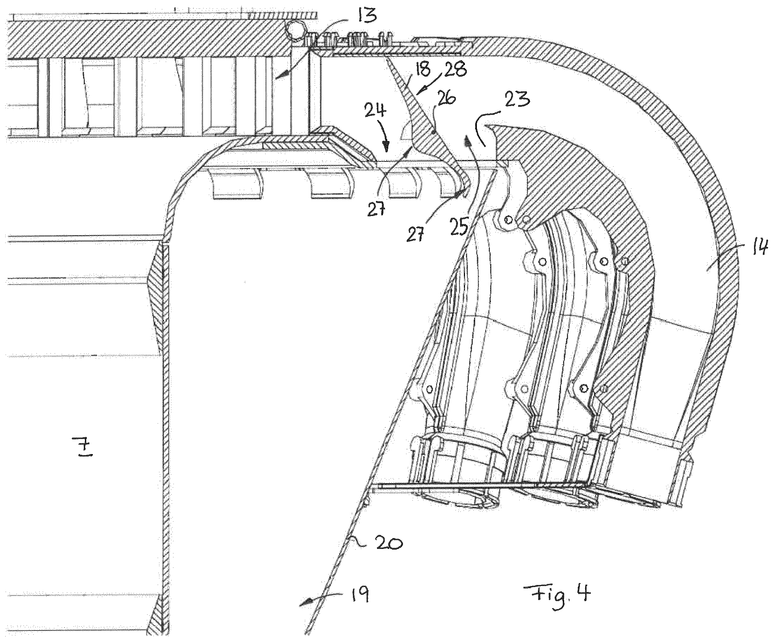

Wie die Figuren 3 und 4 zeigen, sind die Weichen 28 dazu ausgebildet, in ihrer Ausbringstellung den Ausbringauslass 14 und die Verteilerkammer 13 bzw. die Verbindung zwischen Verteilerkammer 13 und dem Ausbringauslass 14 vollständig zu verschließen und gänzlich von der Rückführeinrichtung 19 abzusperren. Die Weiche 28 verschließt die Bypass- bzw. Rückführöffnung 17 vollständig und unterbringt damit die Verbindung zwischen dem Rückführraum 21 mit der Verteilerkammer 13 und dem Ausbringauslass 14 zur Gänze, sodass der Förderluftstrom bzw. das Gemisch aus Förderluftstrom und Verteilgut beim Ausbringen in die Ausbringleitungen 11 keine Effizienzverluste erleidet, insbesondere keine Fehlluft aus der Rückführeinrichtung 19 zu Druckverlusten im Ausbringauslass 14 führt.

Andererseits ist die Weiche 28 dazu ausgebildet, in der Rückführstellung, vgl. Figur 4, die Verteilerkammer 13 über einen Umweg über die den Rückführraum 21 mit einem Luftauslass 23 zu verbinden, über den überschüssige Förderluft aus dem Rückführraum 21 entweichen kann. Vorteilhafterweise kann der genannte Luftauslass 23 in den Ausbringauslass 14 münden, sodass die Weiche 28 in ihrer Rückführstellung die Verteilerkammer 13 über den Umweg über den Rückführraum 21 mit dem Ausbringauslass 14 verbindet, um überschüssige Förderluft aus dem Rückführraum 21 in den Ausbringauslass 14 entweichen zu lassen.

Genauer gesagt ist die Weiche 28 dazu ausgebildet, in der genannten Rückführstellung zwei zueinander gegenläufige Kanäle 24 und 25 zu definieren, die beide durch die genannte Bypassöffnung 17 hindurchtreten. Einer der beiden gegenläufigen Kanäle 24 führt dabei aus der Verteilerkammer 13 in den Rückführraum 21, insbesondere in den Trichter 20. Der dazu gegenläufige Kanal 25 führt aus dem Rückführraum 21, insbesondere dem Trichter 20 gegenläufig zum erstgenannten Kanal 24 in den Ausbringauslass 14.

Vorteilhafterweise führt der Kanal 24 auf der stromaufwärtigen Seite der Weiche 28 aus der Verteilerkammer 13 abwärts in den Rückführraum 21, während der dazu gegenläufige Kanal 25 aufwärts verläuft und vom oberen Endabschnitt des Rückführraums 21, insbesondere des Trichters 20 nach oben in den Ausbringauslass 14 führt. Diese gegenläufige, einmal nach unten und das andere Mal nach oben führende Ausrichtung der beiden gegenläufigen Kanäle 24 und 25 hilft dabei, das rückzuführende Verteilgut vom gegenläufigen Kanal 25 und damit vom Luftauslass 23 fernzuhalten.

Um die Bypassöffnung 17 in der Rückführstellung der Weiche 28 in solche zwei gegenläufigen Kanäle 24 und 25 zu unterteilen, kann die Weiche 28 vorteilhafterweise als Klappe 18 ausgebildet sein, die nach Art einer Wippe um eine Schwenkachse 26 schwenkbar ist, die sowohl vom stromaufseitigen Randabschnitt als auch vom stromabseitigen Randabschnitt der Klappe 18 beabstandet angeordnet ist. Insbesondere kann die genannte Schwenkachse 26 in einem mittleren Abschnitt der Klappe 18 vorgesehen sein, sodass bei Verschwenken der Klappe 18 aus der liegenden Ausbringstellung in die schräg angestellte Rückführstellung ein Klappenabschnitt nach oben schwenkt und ein anderer Klappenabschnitt nach unten schwenkt.

Vorteilhafterweise kann die Schwenkachse 26 exzentrisch bzw. außermittig angeordnet sein, beispielsweise etwa mittig in der stromabseitigen Hälfte der Klappe 18 und/oder beispielsweise im Bereich von 1/6 bis 1/3 oder 1/5 bis ¼ oder etwa bei ¼ der Länge der Klappe 18, wenn die besagte Länge von dem stromabseitigen Randabschnitt zum stromaufseitigen Randabschnitt der Klappe 18 gemessen wird.

Mit anderen Worten kann die Schwenkachse 26 zum stromabseitigen Randabschnitt der Klappe 18 hin versetzt, davon aber immer noch beabstandet angeordnet sein.

In vorteilhafter Weiterbildung der Erfindung kann die Weiche 28 derart beschaffen sein, dass beim Verstellen in die Rückführstellung ein stromabseitiger Weichenteil in den Rückführraum 21 einfährt bzw. einschwenkt und ein stromaufwärtiger Weichenteil in den Ausbringauslass 14 bzw. die Verbindung des Ausbringauslasses 14 mit der Verteilerkammer 13 einfährt bzw. einschwenkt.

Wie Figur 4 zeigt, unterteilt die Weiche 28 in der Rückführstellung die Bypassöffnung 17 in die beiden genannten gegenläufigen Kanäle 24 und 25.

Die Schwenkachse 26 ist vorteilhafterweise zumindest näherungsweise in der Ebene der Bypassöffnung 17 angeordnet. Unabhängig hiervon kann sich die Schwenkachse 26 zumindest näherungsweise in der Ebene des Bodens des Verteilerkorpus 15 erstrecken, vgl. Figur 4.

Wie Figur 4 zeigt, verbleibt in der Rückführstellung der Weiche 28 an einem oberen, äußeren Randabschnitt des Rückführraums 21 ein Spalt zwischen dem stromabwärtigen Ende der Weiche 28 und einer Wandung des Rückführraums 21 bzw. der Bypassöffnung 17, wobei der genannte Spalt den Luftauslass 23 bildet, über den überschüssige Förderluft aus dem Rückführraum 21 in den Ausbringauslass 14 entweichen kann.

Um das in den Rückführraum 21 rückgeführte Verteilgut, beispielsweise Saatgutkörner oder Dünger, von dem genannten Luftauslass 23 und dem Ausbringauslass 14 fernzuhalten, kann die Weiche 28 eine insgesamt, grobgesprochen V-förmige Konturierung besitzen und sich zum stromabseitigen Randabschnitt hin verdicken, um das auf der stromaufseitigen Wandung der Weiche 28 entlangströmende Verteilgut von dem Luftauslass 23 wegzulenken.

Insbesondere kann die stromaufwärtige Seite der Weiche 28 mit einer schanzen- oder hügelartigen, sich vom Luftauslass 23 wegspreizenden Strömungsleitkontur 27 versehen sein, die das an der Weiche 28 entlangströmende Verteilgut auf dem Weg in den Rückführraum 21 von dem Luftauslass 23 weglenkt.

Eine solche Strömungsleitkontur 27 kann auch mehrere Stufen umfassen bzw. mehrstufig ausgebildet sein. Wie Figur 4 zeigt, kann beispielsweise in einem mittleren Abschnitt der Klappe 18 eine Verdickung vorgesehen sein, die eine erste schanzenartige Leitkontur bildet. Hiervon unabhängig kann an einem stromabseitigen Randabschnitt der Klappe 18 eine schanzenartige Umlenkkontur beispielsweise in Form eines aufgebogenen Falzes vorgesehen sein, vgl. Figur 4.

Um verlässlich zu verhindern, dass rückzuführendes Verteilgut über den Umweg des Rückführraums 21 durch den Luftauslass 23 in die Ausbringauslässe 14 gelangt, kann der Rückführraum 21 auch mit einem Rückhaltegitter bzw. -sieb 29 versehen sein, das im Luftauslass 23 angeordnet ist. Das genannte Rückhaltegitter bzw. -sieb 29 ist dabei derart durchlässig ausgebildet, dass Förderluft hindurchströmen kann, andererseits aber das Verteilgut wie Saatgut oder Dünger zurückgehalten werden. Das genannte Rückhaltegitter 29 kann hierzu mit einer ausreichend feinen Perforierung versehen sein, die Luft durchströmen lässt, aber Saatgut und Dünger zurückhält. Das Rückhaltegitter 29 kann alternativ auch eine maschenartige Netzstruktur umfassen, die Luft hindurchtreten lässt, aber Verteilgut zurückhält. Insofern ist der Term Gitter breit zu verstehen und kann auch in Form einer Maschenstruktur oder eines flexiblen Netzes ausgebildet sein bzw. solche flexiblen Netzabschnitte umfassen.

Die Rückhalteeinrichtung bildet insofern ein Sieb, das Luft hindurchtreten lässt und Verteilgut zurückhält.

Vorteilhafterweise kann das Rückhaltesieb 29 an den Verstellweg der Weiche 28 angepasst sein derart, dass die Weiche 28 in der Rückführstellung an das Rückhaltesieb 29 angrenzt und/oder das Rückhaltesieb 29 kontaktiert, sodass das Rückhaltesieb 29 den Luftauslass 23 und/oder den Auslasskanal entlang der stromabwärtigen Seite der Weiche 28 vollständig verschließt.

Insbesondere kann das Rückhaltesieb 29 einen Steg bilden, der entlang eines äußeren Randes des Rückführraums 21 und/oder entlang einer Wandung des Luftauslasses 23 angeordnet sein kann derart, dass das Rückhaltesieb 29 an die Weiche 28 in deren Rückführstellung angrenzt.

Beispielsweise kann das Rückhaltesieb 29 den Spalt verschließen, der bei in Rückführstellung befindlicher Weiche 28 zwischen der besagten Weiche 28 und einem äußeren Rand des Trichters 20 verbleibt.

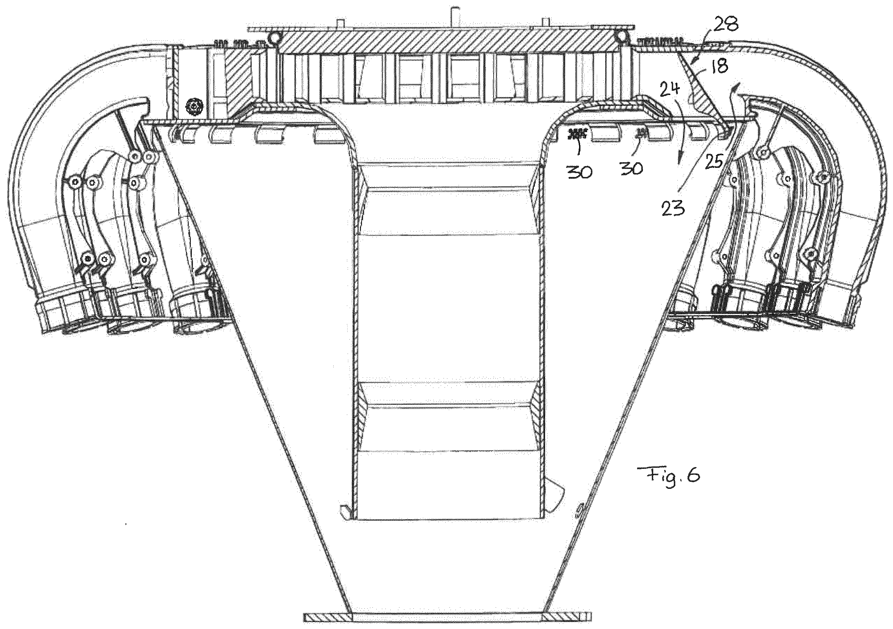

Wie Figur 6 zeigt, kann der Lufteinlass 23, über den überschüssige Förderluft aus dem Rückführraum 21 entweichen kann, auch Durchbrüche zur Umgebung hin umfassen, sodass die überschüssige Förderluft am Ausbringauslass 14 vorbei direkt in die Umgebung entweichen kann. Vorzugsweise können an einem oberen Rand des Trichters 20 gitterartige Durchbrüche oder perforationsartige Auslassbohrungen 30 vorgesehen sein, die einen Luftauslass 23 bilden, über den überschüssige Förderluft aus dem Trichter 20 entweichen kann.

## Patentansprüche

1. Verteilerkopf für eine landwirtschaftliche Verteilmaschine, insbesondere Sä- und/oder Düngemaschine (1), zum pneumatischen Verteilen von Verteilgut wie Saatgut oder Dünger, mit einem aufrechten Steigrohr (7) zum Zuführen des Verteilguts in eine vorzugsweise pilzkopfförmige Verteilerkammer (13), von der über den Umfang der Verteilerkammer (13) verteilt eine Mehrzahl von Ausbringauslässen (14) abgeht, die vom Verteilerkopf (8) weg zu Ausbringelementen (10) der Verteilmaschine führen, wobei zumindest einem der Ausbringauslässe (14) eine Weiche (28) zugeordnet ist, die zwischen einer Ausbringstellung und einer Rückführstellung hin- und herschaltbar ist, wobei die Weiche (28) in der Ausbringstellung die Verteilerkammer (13) mit dem Ausbringauslass (14) verbindet sowie in der Rückführstellung die Verteilerkammer (13) mit einem Rückführraum (21) zum Rückführen des Verteilguts verbindet, **dadurch gekennzeichnet, dass** die Weiche (28) dazu ausgebildet ist, in der Rückführstellung die Verteilerkammer (13) über den Rückführraum (21) mit einem Luftauslass (23) zum Abführen überschüssiger Förderluft zu verbinden und in der Ausbringstellung den Rückführraum (21) von der Verteilerkammer (13) und dem Ausbringauslass (14) abzusperren.

2. Verteilerkopf nach dem vorhergehenden Anspruch, wobei der genannte Luftauslass (23) den Rückführraum (21) mit dem Ausbringauslass (14) verbindet.

3. Verteilerkopf nach einem der vorhergehenden Ansprüche, wobei die Weiche (28) dazu ausgebildet ist, in der Rückführstellung zwei zueinander gegenläufige Kanäle (24, 25) zu formen und/oder voneinander zu trennen, von denen einer auf einer stromaufwärtigen Seite der Weiche (28) aus der Verteilerkammer (13) in den Rückführraum (21) führt und der andere dazu gegenläufig auf der stromabwärtigen Seite der Weiche (28) aus dem Rückführraum (21) zum Luftauslass (23) und/oder in den Ausbringauslass (14) führt.

4. Verteilerkopf nach dem vorhergehenden Anspruch, wobei die beiden gegenläufigen Kanäle (24, 25) aufrecht oder näherungsweise vertikal verlaufen, wobei der aus der Verteilerkammer (13) in den Rückführraum (21) führende Kanal 24 abschüssig verläuft und der aus dem Rückführraum (21) zum Luftauslass (23) und/oder in den Ausbringauslass (14) führende Kanal (25) ansteigend verläuft.

5. Verteilerkopf nach einem der vorhergehenden Ansprüche, wobei die Weiche (28) eine Klappe (28) umfasst, die um eine Schwenkachse (26) zwischen den genannten Rückführ- und Ausbringstellungen hin- und herschwenkbar gelagert ist, wobei die genannte Schwenkachse (26) von gegenüberliegenden Randabschnitten der Klappe (18) beabstandet angeordnet und/oder zwischen gegenüberliegenden Randabschnitten der Klappe (18) in einem Mittelabschnitt der Klappe (18) angeordnet ist.

6. Verteilerkopf nach dem vorhergehenden Anspruch, wobei die Schwenkachse (26) derart angeordnet ist, dass beim Verschwenken der Klappe (18) aus der Ausbringstellung in die Rückführstellung nach Art einer Wippe ein Klappenabschnitt in den Rückführraum (21) schwenkt und ein gegenüberliegender Klappenabschnitt in den Ausbringauslass (14) und/oder die Verbindung des Ausbringauslasses (14) mit der Verteilerkammer (13) einschwenkt.

7. Verteilerkopf nach einem der vorhergehenden Ansprüche, wobei die Schwenkachse (26) der Klappe (18) zu einem stromabwärtigen Rand der Klappe (18) hin exzentrisch versetzt angeordnet, jedoch von dem genannten stromabseitigen Randabschnitt beabstandet ist.

8. Verteilerkopf nach einem der vorhergehenden Ansprüche, wobei die Schwenkachse (26) der Klappe (18) bodenparallel zu einem Boden (16) der Verteilerkammer (13) etwa in der Ebene der Bypassöffnung (17) angeordnet ist, die im Boden (16) eingangs des Ausbringauslasses (14) vorgesehen ist, und/oder die Klappe (18) die genannte Bypassöffnung (17) in der Rückführstellung in zwei Öffnungsteile unterteilt.

9. Verteilerkopf nach einem der vorhergehenden Ansprüche, wobei die Weiche (28) eine keilförmige Aufspreizung in Strömungsrichtung besitzt und/oder auf einer dem Rückführstrom in den Rückführraum (21) zugewandten Seite eine schanzen- oder hügelförmige Strömungsleitfläche aufweist, die das an der Weiche (18) entlangströmende, in den Rückführraum (21) geführte Verteilgut von dem Luftauslass (23) weglenkt.

10. Verteilerkopf nach dem vorhergehenden Anspruch, wobei die Strömungsleitfläche eine hügelartige erste Leitkontur in einem Mittelabschnitt der Klappe (18) sowie eine schanzenförmige oder biegefalzartige zweite Leitkontur am stromabseitigen Ende der Klappe (18) umfasst.

11. Verteilerkopf nach einem der vorhergehenden Ansprüche, wobei dem Luftauslass (23) ein Rückhaltesieb (29) zugeordnet ist, das Luft in den Luftauslass (23) strömen lässt, aber Verteilgut zurückhält.

12. Verteilerkopf nach dem vorhergehenden Anspruch, wobei das genannte Rückhaltesieb (29) derart an die Bewegungsbahn der Weiche (28) angepasst ist, dass die Weiche (28) in der Rückführstellung an das Rückhaltesieb (29) angrenzt und in der Ausbringstellung von dem Rückhaltesieb (29) beabstandet ist.

13. Verteilerkopf nach einem der beiden vorhergehenden Ansprüche, wobei das Rückhaltesieb (29) einen von einer Wandung des Rückhalteraums und/oder der Bypassöffnung (17) vorspringenden Steg bildet.

14. Verteilerkopf nach einem der vorhergehenden Ansprüche, wobei der Rückführraum (21) von einem Trichter (20) begrenzt wird, der einen oberen Abschnitt des Steigrohrs (7) umgibt und an einen äußeren Randabschnitt des Bodens (16) des Verteilerkopfes (8) angrenzt.

15. Verteilerkopf nach einem der vorhergehenden Ansprüche, wobei der Luftauslass (23) Perforierungen (30) des Trichters (20) an dessen oberen Randabschnitt (20o) umfasst.
